**Europäisches Patentamt**

**European Patent Office**

**Office européen des brevets**

(19)

(11) Veröffentlichungsnummer : **0 351 492 B1**

(12) # EUROPÄISCHE PATENTSCHRIFT

(45) Veröffentlichungstag der Patentschrift :
20.05.92 Patentblatt 92/21

(51) Int. Cl.⁵ : **B62D 55/24**

(21) Anmeldenummer : **89105032.0**

(22) Anmeldetag : **21.03.89**

(54) **Verfahren zur Herstellung einer Gleiskette und bei der Durchführung des Verfahrens zu verwendende Gummihülsen.**

(30) Priorität : **21.07.88 DE 3824774**

(43) Veröffentlichungstag der Anmeldung :
**24.01.90 Patentblatt 90/04**

(45) Bekanntmachung des Hinweises auf die Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**DE-A- 2 323 765**
**GB-A- 544 711**
**US-A- 2 387 802**
**US-A- 2 845 308**

(73) Patentinhaber : **Clouth Gummiwerke AG**
**Niehler Strasse 92 - 116**
**W-5000 Köln 60 (DE)**

(72) Erfinder : **Böhne, Hans**
**Pohler Bruch 8**
**W-5067 Kürten (DE)**
Erfinder : **Eisengarten, Hubert**
**Krefelder Wall 41**
**W-5000 Köln 1 (DE)**
Erfinder : **Kramer, Volker**
**Badstrasse 18**
**W-7141 Erdmannshausen (DE)**
Erfinder : **Helsper, Günther**
**Im Kaiserfeld 5**
**W-7141 Hochdorf (DE)**
Erfinder : **Depfenhart, Friedrich**
**Dickenbergstrasse 23**
**W-7251 Heimsheim (DE)**

(74) Vertreter : **Happe, Otto, Dipl.-Ing.**
**Patentanwalt Meistersingerstrasse 34**
**W-4300 Essen 13 (DE)**

EP 0 351 492 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung einer endlosen Gleiskette aus Gummi für ein geländegängiges Fahrzeug, in der vor der Vulkanisation des Gummis zur Übertragung der Zugkraft mit Abstand nebeneinander angeordnete Drahtseile eingebettet worden sind, die von mehreren mit Abstand hintereinander angeordneten Klemmplatten umfaßt sind, und bei der Durchführung des Verfahrens zu verwendende Gummihülsen.

Bei den bekannten Gleisketten der vorgenannten Art kommt es immer wieder vor, daß Drahtseile nicht genau mittig angeordnet sind und daher nach der Vulkanisation des die Gleiskette bildenden Gummis diese Drahtseile nicht vollständig von Gummi umhüllt sind, sondern unmittelbar an den Klemmplatten anliegen. Dies führt infolge der Reibung zwischen Drahtseil und Klemmplatte zu einer Zerstörung des Drahtseiles, wodurch schließlich die gesamte Gleiskette unbrauchbar wird.

Der Erfindung liegt die Aufgabe zugrunde, ein Verfahren zu schaffen, das den vorgenannten Nachteil vermeidet.

Die gestellte Aufgabe wird dadurch gelöst, daß vor dem Einbringen der Drahtseile in die Vulkanisierform im Bereich der Klemmplatten ausvulkanisierte Gummihülsen auf die Drahtseile aufgeschoben werden. Durch diese Gummihülsen ist die Lage der Drahtseile genau fixiert, so daß eine Berührung mit den Klemmplatten völlig ausgeschlossen ist.

In Ausgestaltung der Erfindung werden die Drahtseile vorher verzinkt. Hierdurch wird eine besonders gute Haftung des Gummis an den Drahtseilen erwirkt.

In weiterer Ausgestaltung der Erfindung sind die bei der Durchführung des erfindungsgemäßen Verfahrens zu verwendenden Gummihülsen mit einem längs verlaufenden Schlitz versehen, wodurch das Aufschieben der Gummihülsen auf die Drahtseile erheblich vereinfacht wird.

Nach einem weiteren Merkmal der Erfindung sind mindestens jeweils zwei der Gummihülsen durch Stege miteinander verbunden. Dies erleichtert das Ausrichten der Gummihülsen in Bezug auf die Klemmplatten.

Die Erfindung ist anhand der Zeichnung näher erläutert. Es zeigen:

Fig. 1 eine Gleiskette im Querschnitt;

Fig. 2 die Gleiskette gem. Fig. 1 in Draufsicht;

Fig. 3 mehrere durch Stege miteinander verbundene Gummihülsen in perspektivischer Darstellung.

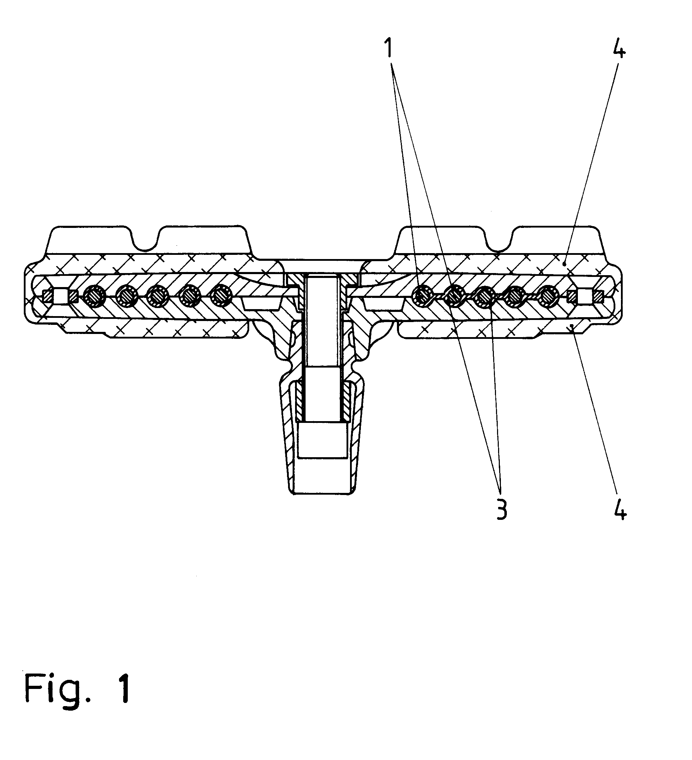

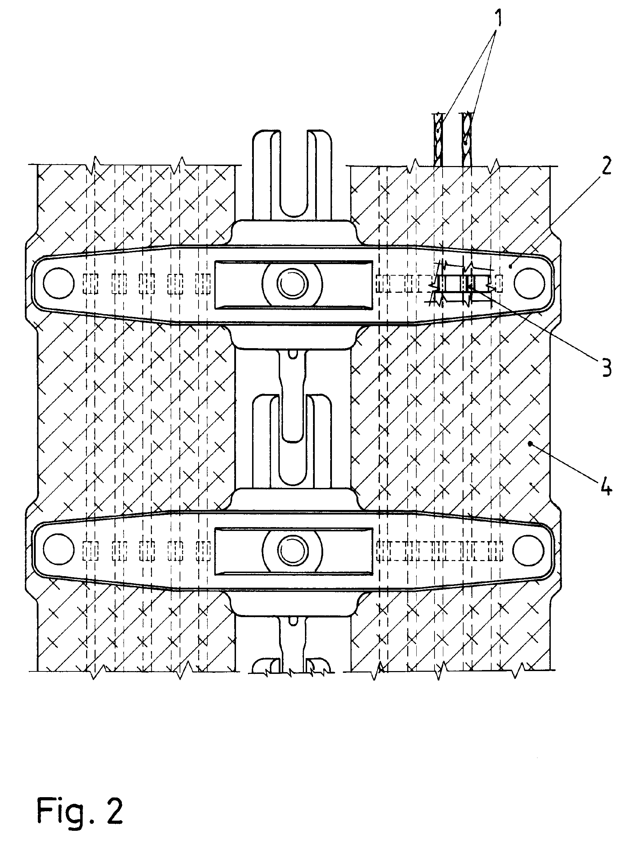

Die Fig. 1 und 2 zeigen eine Gleiskette, bei der die zur Übertragung der Zugkraft erforderlichen Drahtseile 1 zwischen Klemmplatten 2 gehalten sind. Im Vereich der Klemmplatten 2 sind auf die Drahtseile 1 Gummihülsen 3 aufgeschoben. Dies erfolgt vor dem Einbringen der Drahtseile 1 in die Vulkanisierform, also vor der Vulkanisation des die Gleiskette 4 bildenden Gummis.

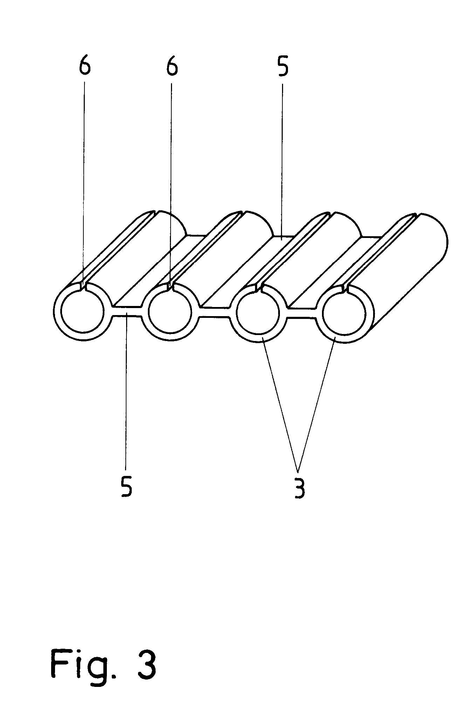

In Fig. 3 sind mehrere durch Stege 5 verbundene Gummihülsen 3 dargestellt, wobei jede Gummihülse 3 mit einem Schlitz 6 versehen ist.

## Patentansprüche

1. Verfahren zur Herstellung einer endlosen Gleiskette aus Gummi für geländegängige Fahrzeuge, in der vor der Vulkanisation des Gummis zur Übertragung der Zugkraft mit Abstand nebeneinander angeordnete Drahtseile (1) eingebettet worden sind, die von mehreren mit Abstand hintereinander angeordneten Klemmplatten (2) umfaßt werden, **dadurch gekennzeichnet,** daß vor dem Einbringen der Drahtseile (1) in die Vulkanisierform im Bereich der Klemmplatten (2) ausvulkanisierte Gummihülsen (3) auf die Drahtseile (1) aufgeschoben werden.

2. verfahren nach Anspruch 1, dadurch gekennzeichnet, daß die Drahtseile (1) vorher verzinkt werden.

3. Bei der Durchführung des Verfahrens nach Anspruch 1 oder 2 zu verwendende Gummihülsen, dadurch gekennzeichnet, daß sie mit einem längs verlaufenden Schlitz (4) versehen sind.

4. Gummihülsen nach Anspruch 3, dadurch gekennzeichnet, daß mindestens jeweils zwei der Gummihülsen (3) durch Stege (5) miteinander verbunden sind.

## Claims

1. Process for the manufacture of an endless caterpillar track of rubber for cross-country vehicles, in which, prior to the vulcanisation of the rubber, wire cables (1), which are arranged at a spacing beside one another and which are embraced by several clamping plates (2) arranged at a spacing one behind the other, have been embedded for the transmission of the tractive force, characterised thereby that vulcanised-out rubber sleeves (3) are pushed onto the wire cables (1) in the region of the clamping plates (2) prior to the introduction of the wire cables (1) into the vulcanising mould.

2. Process according to claim 1, characterised thereby that the wire cables (1) are previously galvanised.

3. Rubber sleeves to be used in carrying out of the process according to claim 1, characterised thereby that they are provided with a longitudinally extending slot (4).

4. Rubber sleeves according to claim 3, characterised thereby that at least two of the rubber sleeves (3) are each time connected with one another by webs (5).

**Revendications**

1. Procédé de fabrication d'une chenille sans fin en caoutchouc pour un véhicule tous terrains, dans laquelle des câbles en fils d'acier (1) disposés à l'écart les uns à côté des autres sont incorporés avant la vulcanisation du caoutchouc afin de transmettre l'effort de traction, et sont entourés par plusieurs plaques de serrage (2) disposées à l'écart les unes derrière les autres, caractérisé en ce que, avant l'installation des câbles en fils d'acier (1) dans la forme de vulcanisation, des douilles (3) en caoutchouc vulcanisé sont glissées autour des câbles en fils d'acier (1), au voisinage des plaques de serrage (2).

2. Procédé selon la revendication 1, caractérisé en ce que les câbles en fils d'acier (1) sont préalablement zingués.

3. Douilles en caoutchouc pour la mise en oeuvre du procédé selon la revendication 1 ou 2, caractérisées en ce qu'elles sont dotées d'une fente longitudinale (4).

4. Douilles en caoutchouc selon la revendication 3, caractérisées en ce qu'au moins deux des douilles en caoutchouc (3) sont chaque fois reliées l'une à l'autre par des traverses (5).

Fig. 1

Fig. 2

Fig. 3